**Europäisches Patentamt**

**European Patent Office**

**Office européen des brevets**

(11) Veröffentlichungsnummer: **0 152 867**
A2

# EUROPÄISCHE PATENTANMELDUNG

(21) Anmeldenummer: 85101261.7

(22) Anmeldetag: 07.02.85

(51) Int. Cl.⁴: **B 60 N 1/06**

(30) Priorität: 09.02.84 DE 3404612

(43) Veröffentlichungstag der Anmeldung: 28.08.85
Patentblatt 85/35

(84) Benannte Vertragsstaaten: DE FR GB

(71) Anmelder: C. Rob. Hammerstein GmbH,
Postfach 13 01 18 Merscheiderstrasse167,
D-5650 Solingen 13 (DE)

(72) Erfinder: Bauer, Heinz, Hammerstrasse 9,
D-5650 Solingen 11 (DE)
Erfinder: Becker, Burckhard, Dipl.-Ing.,
Obenkatternberg 25, D-5650 Solingen 11 (DE)
Erfinder: Frohnhaus, Ernst-Reiner, Hammerstrasse 13,
D-5650 Solingen 11 (DE)
Erfinder: Gedig, Alfred, Dipl.-Ing., Hammerstrasse 28,
D-5650 Solingen 11 (DE)
Erfinder: Kunes, Joseph, Dipl.-Ing., Bertha von Suttner
Strasse 17, D-5650 Solingen 1 (DE)

(74) Vertreter: Bauer, Wulf, Dr., Wolfgang-Müller-Strasse 12,
D-5000 Köln 51 (Marienburg) (DE)

(54) Kopfstütze eines Fahrzeugsitzes mit zwei an der Sitzlehne befestigbaren Tragholmen.

(57) Bei der Kopfstütze eines Fahrzeugsitzes sind zwei an der Sitzlehne befestigbare Tragholme (20, 22) gelenkig verstellbar mit einem Rahmen (38) verbunden, der das Stützkissen trägt. Dabei ist zwischen den Tragholmen (20, 22) und dem Rahmen (38) ein Zwischenglied (32) angeordnet, das einerseits jeweils im oberen Endbereich jedes Tragholmens (20, 22) um jeweils einen ersten Gelenkbereich (24 bzw. 26) andererseits am Rahmen (38) um einen zweiten Gelenkbereich (36) schwenkbar gelagert ist. Die Schwenkachsen (28) dieser Gelenkbereiche (24, 26; 36) laufen parallel zueinander. Weiterhin sind die Gelenkbereiche (24, 26; 36) reibungsmässig so eingestellt, dass sie zwar durch eine am Stützkissen angreifende Verstellkraft winkelverstellbar sind, aber bei Normalbelastung des Stützkissens durch einen angelehnten Kopf eines Passagiers ihre Winkelstellung nicht ändern.

**DR. RER. NAT. WULF BAUER**
**PATENTANWALT**

WOLFGANG-MÖLLER-STRASSE 12
D-5000 KÖLN 51 (MARIENBURG)
H11 84/3 EPA

0152867

Anmelder:      Firma C. Rob. Hammerstein GmbH
in 5650 Solingen 13

Bezeichnung: Kopfstütze eines Fahrzeugsitzes mit zwei an
der Sitzlehne befestigbaren Tragholmen.

---

Die Erfindung bezieht sich auf eine Kopfstütze eines Fahrzeugsitzes mit zwei an der Sitzlehne befestigbaren und im wesentlichen parallel zu dieser verlaufenden Tragholmen und einem ein Stützkissen tragenden Rahmen, der gelenkig verstellbar mit den Tragholmen verbunden und quer zu diesen verstellbar ist.

Bei der aus der DE-OS 29 11 321 bekannten Kopfstütze dieser Art ist seitlich ein Drehknopf vorgesehen, der gegenüber dem eigentlichen Stützkissen seitlich vorsteht und als Handhabe zur Verschwenkung der Kopfstütze um einen parallel zur Sitzlehnenoberkante verlaufende Schwenkachse dient. Darüberhinaus kann die Kopfstütze gegenüber der Rückenlehne des Fahrzeugsitzes durch Einschieben oder Ausziehen der beiden Tragholme in der Höhe verstellt werden. Weiterhin ist aus der DE-OS 28 10 870 ebenfalls eine Kopfstütze der eingangs genannten Art bekannt, bei der gleichfalls ein Drehknopf seitlich vorsteht und durch diesen Drehknopf das Stützkissen in unterschiedliche Schwenkpositionen gebracht werden kann. Das Stützkissen hat quer zu seiner Schwenkachse eine längliche Profilform, so daß beim Schwenken der obere Kissenbereich mehr oder weniger nach vorn kommt, wodurch sich eine mehr oder weniger vorn befindliche Abstützung ergibt.

- 2 -

Diese Ausbildungen haben jedoch den Nachteil, daß die Kopfstütze dann, wenn sie gegenüber dem allgemeinen Verlauf der Rückenlehne verschwenkt ist, im wesentlichen nur eine linienhafte Abstützung ergibt. Insbesondere bei starker Neigungsverstellung des Stützkissens dient lediglich der obere Stützkissenrand als Abstützfläche. Darüberhinaus ändert sich mit einer Neigungseinstellung des Stützkissens zugleich auch die Höhe der Abstützungslinie, dies ist insbesondere durch den relativ kleinen Schwenkradius um die Schwenkachse bedingt. Schließlich ist ein seitlich am Stützkissen befindlicher Drehknopf für einen auf dem Fahrzeugsitz befindlichen Passagier schwer ergreifbar und bedienbar, zumal er sich in einer insbesondere für die Ausführung einer Drehbewegung am Drehknopf griffungünstigen Position befindet.

Ausgehend von den bekannten Kopfstützen der eingangs genannten Art ist es nun Aufgabe der Erfindung, die Nachteile dieser neigungsverstellbaren Kopfstützen zu vermeiden und eine Kopfstütze zu schaffen, die quer zu den Tragholmen und damit in Stützrichtung so verstellt werden kann, daß unabhängig von einer Höhenverstellung in beliebiger Verstellposition quer zur Rückenlehne stets auch eine Neigungsverstellung des Stützkissens möglich ist. Dabei soll zusätzlich erreicht werden, daß das Stützkissen selbst als Handhabe für die Verstellbewegung dient, ein zusätzlicher Drehknopf oder dergleichen also entfallen kann.

Ausgehend von den Merkmalen der eingangs genannten, vorbekannten Stützkissen wird diese Aufgabe dadurch gelöst, daß ein starres Zwischenglied einerseits jeweils im oberen Endbereich jedes Tragholmes um jeweils einen ersten Gelenkbereich und andererseits am Rahmen um einen zweiten Gelenkbereich schwenkbar gelagert ist, wobei die Schwenkachsen der ersten Gelenkbereiche und des zweiten Gelenkbereichs parallel zueinander verlaufen und diese Gelenkbereiche reibungsmäßig so eingestellt sind, daß die Gelenkbereiche zwar durch eine am Stützkissen angreifende Verstellkraft winkeleinstellbar sind, aber bei Normalbelastung des Stützkissens durch einen angelehnten Kopf eines Passagiers ihre Winkelstellung nicht verändern.

Im Gegensatz zu den vorbekannten Stützkissen ist der Rahmen nicht selbst an den oberen Endbereichen der Tragholme angelenkt, sondern es befindet sich ein Zwischenglied zwischen Holmen und Rahmen. Dadurch ist das Stützkissen nicht nur um eine Schwenkachse, sondern um zwei parallele, im Abstand voneinander befindliche Schwenkachsen schwenkbar, wodurch eine beliebige Vor- und Rückverstellung in Stützrichtung unabhängig von einer Neigungsverstellung des Stützkissens ausgeführt werden kann. Dabei wird das Stützkissen jeweils selbst ergriffen, es hat also keine separate Handhabe für das Einstellen. Dies ermöglicht es einerseits, auf einen Einstellmechanismus für die Position des Stützkissens zu verzichten, andererseits dient das gesamte Stützkissen als Handhabe für sich, es genügt also, einen Bereich des Stützkissens zu erfassen, um dies zu verstellen. Anders ausgedrückt übernimmt das Stützkissen als Ganzes zugleich die Funktion einer Handhabe.

Erfindungsgemäß sind die beiden ersten und der mindestens eine zweite Gelenkbereich so eingestellt, daß eine gewählte Position des Stützkissens beim praktischen Gebrauch beibehalten wird. Die im Normalfall, also nicht unfallbedingt am Stützkissen auftretenden Anlagekräfte des Kopfes reichen nicht aus, um das Stützkissen zu verstellen. Das Stützkissen

0152867

kann jedoch durch eine größere Kraft verstellt werden, die beispielsweise manuell oder aber auch durch eine deutliche Kraftanwendung des Kopfes auf das Stützkissen aufgebracht wird.

In besonders bevorzugter Weiterbildung der Erfindung sind die Schwenkwinkel aller Gelenkbereiche jeweils in beiden Schwenkrichtungen begrenzt, wofür vorzugsweise elastische Anschläge verwendet werden. Hieraus ergibt sich der Vorteil, daß auch bei unfallbedingten Belastungen das Stützkissen eine tatsächliche Abstützung des Kopfes ermöglicht. Bei derartigen Belastungen wird es zwar zunächst um einen gewissen Winkel verschwenkt oder eine gewisse Strecke verschoben, bis die Anschläge der Gelenkbereiche zur Wirkung kommen, dann wird jede weitere Bewegung des Stützkissens und damit des abgestützten Kopfes gehemmt. Die Gelenkbereiche und die Anschläge sind also entsprechend stabil auszubilden. Vorteilhaft ist, daß bereits ein Teil der Unfallenergie in den reibungsbehafteten Gelenkbereichen verzehrt wird.

Eine besonders kompakte Ausbildung des Stützkissens ergibt sich, wenn der Rahmen durch ein Rückteil und ein Vorderteil gebildet ist und sich das Zwischenglied zwischen diesen beiden Teilen befindet. Diese Konstruktion ermöglicht zugleich eine besonders wirksame und einfache Ausbildung der Anschläge für die beiden unteren Gelenkbereiche. Diese Anschläge werden dadurch gebildet, daß die unteren Gelenkbereiche entweder innen an das Vorderteil oder von innen an das Rückteil anschlagen.

In vorzugsweiser Ausbildung befinden sich die ersten Gelenkbereiche entweder am oberen oder am unteren Horizontalrand des Stützkissens. Vorzugsweise befindet sich der zweite Gelenkbereich jeweils am anderen Rand des Stützkissens, wobei allerdings eine Anordnung des mindestens einen zweiten Gelenkbereichs an beliebiger anderer Stelle, beispielsweise in der Mitte des Rahmens durchaus möglich ist. Eine besonders günstige und raumsparende Ausbildung ergibt sich, wenn sich die ersten Gelenkbereiche im unteren Bereich des Stützkissens, gegebenenfalls unterhalb des Stützkissens befinden. Andererseits bewirken die Tragholme dann eine wirksame Abstützung des Stützkissens bei Unfällen nach hinten, wenn sich die ersten Gelenkbereiche oberhalb des zweiten Gelenkbereichs befinden.

In bevorzugter Weiterbildung sind am Seitenteil des Rahmens, vorzugsweise an den Seitenteilen des Vorderteils des Rahmens Seitenbackenträger in jeweils einem dritten Gelenkbereich angelenkt, der wiederum - wie vorgegeben - eine definierte Gelenkreibung aufweist und dessen Schwenkachse im wesentlichen rechtwinklig zu den Achsen der ersten und zweiten Gelenkbereiche verläuft.

Weitere Vorteile und Merkmale ergeben sich aus den übrigen Ansprüchen sowie der nun folgenden Beschreibung von bevorzugten Ausführungsbeispielen, die jedoch nicht einschränkend zu verstehen sind und im folgenden unter Bezugnahme auf die Zeichnung näher erläutert werden. In dieser zeigen:

Fig. 1      eine perspektivische Darstellung einer Kopfstütze ohne Stützkissen mit Seitenbacken,

Fig. 2      eine prinzipielle Seitenansicht des Gelenkmechanismus, wie er im Ausführungsbeispiel nach Figur 1 eingesetzt ist,

Fig. 3      einen Gelenkmechanismus, bei dem sich der zweite Gelenkbereich in der Vertikalmitte des Rahmens befindet, und

Fig. 4    eine Anordnung, bei der die ersten Gelenkbereiche
oberhalb des zweiten Gelenkbereichs angeordnet
sind.

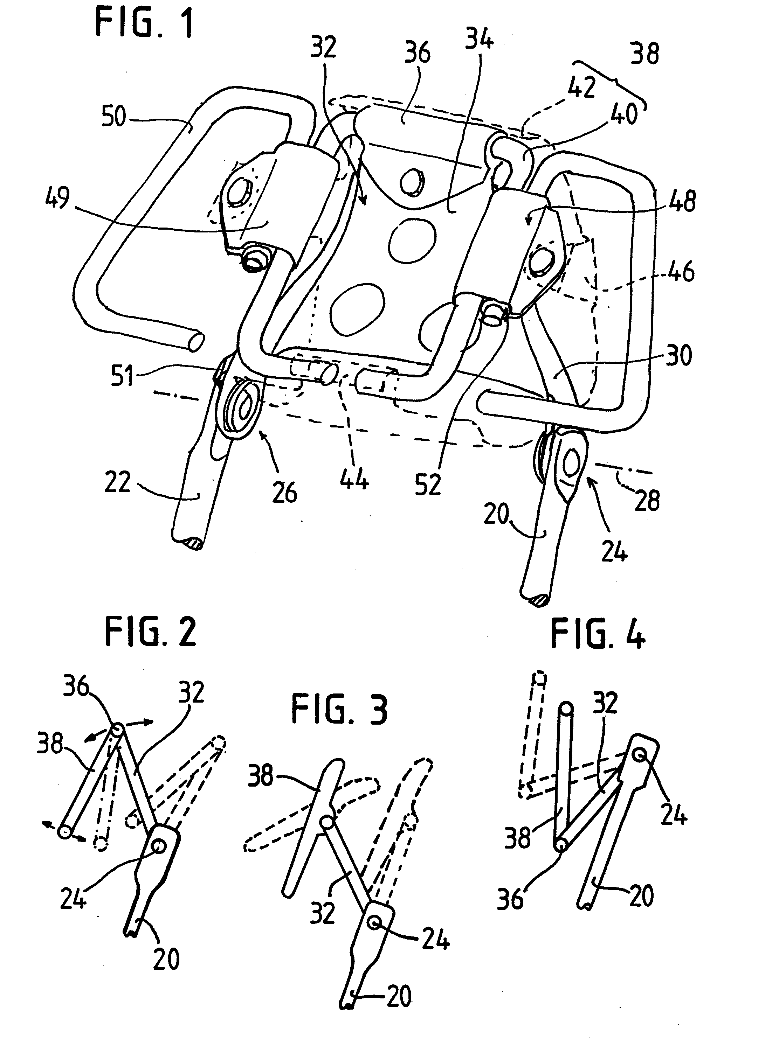

Die Kopfstütze nach dem ersten Ausführungsbeispiel, also den
Figuren 1 und 2, hat zwei an einer Sitzlehne (nicht dargestellt) befestigbare und im wesentlichen parallel zu dieser
verlaufende Tragholme 20, 22. Diese sind jeweils als Rohre
ausgebildet, in ihrem oberen Endbereich flach zusammengedrückt und dort mit einer Bohrung für jeweils einen ersten
Gelenkbereich 24, 26 versehen. Die beiden ersten Gelenkbereiche sind um eine die Tragholme 20, 22 verbindende und im
wesentlichen parallel zur Oberkante des Fahrzeugsitzes verlaufende, gemeinsame Schwenkachse 28 schwenkbar. In den
ersten Gelenkbereichen 24, 26 sind die oberen Endbereiche
der Tragholme 20, 22 jeweils mit nach unten verlängerten,
seitlichen Wangen 30 eines Zwischengliedes 32 verbunden.
Dieses hat einen flachen Querschnitt in Form eines U-Profils, dessen Schenkel durch die Wangen 30 gebildet sind
und durch eine Basisplatte 34 verbunden werden. Im gezeigten Ausführungsbeispiel verringert sich die Breite der
Basisplatte 34 nach oben hin, die Wangen 30 nähern sich somit. Im oberen Endbereich der Basisplatte 34 ist ein zweiter, länglicher Gelenkbereich 36 vorgesehen, über den das
Zwischenglied mit einem Rahmen 38 gelenkverbunden ist. Die
Schwenkachse des zweiten Gelenkbereichs 36 verläuft parallel zur Schwenkachse 28.

Im gezeigten Ausführungsbeispiel setzt sich der Rahmen 38
aus einem Vorderteil 40 und einem Rückteil 42 zusammen. Das
Vorderteil 40 ist aus einem Rohrabschnitt C-förmig zu einem
Rechteck gebogen, dessen eine, durchgehende Schmalseite
Teil des zweiten Gelenkbereichs 36 bildet, während die gegenüberliegende, andere Schmalseite von einer Lasche 44 des Rückteils 42 U-förmig umgriffen wird, wodurch eine untere Verbindung zwischen Rückteil 42 und Vorderteil 40 geschaffen ist. Darüberhinaus ist das Rückteil 42 über einstückige, nach vorn vorspringende Arme 46 an jeder Seite mit dem Vorderteil 40 verbunden, diese Verbindung erfolgt in Nähe von dritten Gelenkbereichen 48, auf die nun näher eingegangen wird:

An den runden Längsseiten des Vorderteils 40 sind Schellen 49 befestigt, die in der Ebene des Vorderteils 40 nach außen wegstehen und jeweils Teil eines dritten Gelenkbereiches sind. Sie umgreifen an beiden Seiten jeweils einen J-förmigen Seitenbackenträger 50, der ebenfalls aus Rohr gefertigt ist und um eine parallel zu den Längsseiten des Vorderteils 40 verlaufende Schwenkachse verstellt werden kann.

Alle Gelenkbereiche 24, 26; 36 und 48 sind so eingestellt, daß sie mit einem gewissen Kraftaufwand, jedoch noch ausreichend bequem, verstellt werden können, indem beispielsweise der Rahmen 38 oder die Seitenbackenträger 50 ergriffen werden. Andererseits sind diese Gelenkbereiche 24, 26; 36; 48 aber wiederum so reibungsbehaftet, daß sie bei Normalbelastung, also einem an dem Stützkissen des Vorderteils 40 oder der Seitenbackenträger 50 anliegenden Kopf nicht verstellt werden.

Die ersten Gelenkbereiche 24, 26 und der zweite Gelenkbereich 36 haben jeweils Anschläge, auch beim dritten Gelenkbereich 48 ist es vorteilhaft, die Schwenkwinkel durch endseitige Anschläge zu begrenzen. Für den linken, ersten Gelenkbereich 26 ist in Figur 1 ein Anschlag 51 am Tragholm 22 gezeigt, der den Schwenkbereich des Zwischengliedes 32 nach vorn eingrenzt. Die anderen Anschläge sind in der Figur nicht sichtbar.

Der Schwenkwinkel zwischen dem Zwischenglied 32 und dem Rahmen 38 wird dadurch eingegrenzt, daß sich das Zwischenglied 32 zwischen dem Vorderteil 40 und dem Rückteil 42 des Rahmens befindet. Es schlägt daher in einer Schwenkrichtung an die Innenfläche der Basisplatte 34 und in der anderen Schwenkrichtung an die inneren Seitenflächen des Vorderteils 40 an, die Anschläge können jeweils durch Gummizwischenlagen oder dergleichen abgepuffert sein.

Der zweite Gelenkbereich 36 und die dritten Gelenkbereiche 48 sind jeweils dadurch ausgeführt, daß das in Bewegungsrichtung außenliegende Teil von einer längsgeschlitzten Kunststoffhülse 52 umgriffen wird, die von einem laschenartig umgebogenen Endbereich der Basisplatte 34 oder den Laschen 44 umgriffen und auf Spannung gehalten werden. Insgesamt ist diese Anordnung jeweils so getroffen, daß die oben beschriebenen Verstellkräfte unter Berücksichtigung der jeweiligen Hebelarme auftreten. Ähnlich sind auch die ersten Gelenkbereiche 24, 26 ausgeführt, hier werden zwischengelegte Kunststoffscheiben durch einen, jeweils die Schwenkachse 28 bildenden Niet so auf Spannung gehalten, daß eine definierte Verstellkraft zwischen den Tragholmen 20, 22 und dem Zwischenglied 32 auftritt.

Die beschriebene Ausbildung der Gelenkbereiche 24, 26; 36 und 48 hat den Vorteil, daß eine stufenfreie Verstellbarkeit gegeben ist. In geänderter Ausbildung können diese Gelenkbereiche eine federbelastete Rastung haben, indem beispielsweise an einem Gelenkarm eine radiale oder axiale Verzahnung angeordnet ist, in die ein federbelastetes Rastelement des anderen Gelenkarmes eingreift.

Bei einer Kopfstütze ohne Seitenbacken wird man das eigentliche Vorderteil 40 des Rahmens 38 breiter ausbilden. In
diesem Fall kann ein, ebenfalls recht breiter, zweiter Gelenkbereich 36 beibehalten werden, es können aber auch zwei
gleichachsige zweite Gelenkbereiche Einsatz finden. Es ist
möglich, die beiden ersten Gelenkbereiche 24, 26 durch eine
starre Achse miteinander zu verbinden, dadurch wird insbesondere bei höhenverstellbaren Tragholmen 20, 22 eine
gleichmäßige Höhenstellung der Tragholme 20, 22 verbessert.

Das kinematische Prinzip der Kopfstütze nach dem ersten
Ausführungsbeispiel ist in Figur 2 näher erläutert. Hier
sind, wie auch in den weiteren Figuren, die dritten Gelenkbereiche 48 zur besseren Verständlichkeit weggelassen. Danach befinden sich im bisher besprochenen, ersten Ausführungsbeispiel die Schwenkachse 28 im unteren Bereich des
Rahmens 38, die Schwenkachse des zweiten Gelenkbereichs 36
ist am oberen Horizontalrand des Rahmens 38. Zwischenglied
32 und Rahmen 38 haben im wesentlichen dieselbe Armlänge.
Die Tragholme 20, 22 können noch etwas über die ersten Gelenkbereiche 24, 26 nach oben verlängert werden, um als Anschlag für das Zwischenglied 32 zu dienen, der auch unfallbedingten Belastungen widersteht.

Im Ausführungsbeispiel nach Figur 3 ist die Lage der ersten
Gelenkbereiche 24, 26 ungeändert, jedoch befindet sich der
zweite Gelenkbereich 36 etwa in der Mitte des Rahmens 38,
jedoch nach wie vor oberhalb der ersten Gelenkbereiche 24,
36. Im Gegensatz zum ersten Ausführungsbeispiel läßt sich
dadurch die Kippstellung des Rahmens 38 unabhängig von einer

0152867

Vor- oder Rückverstellung des Rahmens 38 einstellen, wie durch die gestrichelt eingezeichneten Positionen des Rahmens 38 angedeutet ist.

Im Ausführungsbeispiel nach Figur 4 schließlich befinden sich die ersten Gelenkbereiche 24, 26 oberhalb des zweiten Gelenkbereichs 36 und in Höhe der Oberkante des Rahmens 38. Der zweite Gelenkbereich 36 befindet sich nun an der Unterkante des Rahmens 38. Er kann auch, wie im Ausführungsbeispiel nach Figur 3, in der Rahmenmitte vorgesehen sein.

Anmelder:    Firma C. Rob. Hammerstein GmbH
             in 5650 Solingen 13

Bezeichnung: Kopfstütze eines Fahrzeugsitzes mit zwei an
             der Sitzlehne befestigbaren Tragholmen.


Ansprüche


1. Kopfstütze eines Fahrzeugsitzes mit zwei an der Sitzlehne befestigbaren und im wesentlichen parallel zu dieser verlaufenden Tragholmen (20, 22) und einem ein Stützkissen tragenden Rahmen (38), der gelenkig verstellbar mit den Tragholmen (20, 22) verbunden und quer zu diesem verstellbar ist, d a d u r c h   g e k e n n z e i c h n e t, daß ein starres Zwischenglied (32) einerseits jeweils im oberen Endbereich jedes Tragholmes (20, 22) und jeweils einem ersten Gelenkbereich (24 bzw. 26) und andererseits am Rahmen (38) um einen zweiten Gelenkbereich (36) schwenkbar gelagert ist, wobei die Schwenkachsen (28) der ersten Gelenkbereiche (24, 26) und des zweiten Gelenkbereiches (36) parallel zueinander verlaufen und diese Gelenkbereiche (24, 26; 36) reibungsmäßig so eingestellt sind, daß die Gelenkbereiche (24, 26; 36) zwar durch eine am Stützkissen angreifende Verstellkraft winkeleinstellbar sind, aber bei Normalbelastung des Stützkissens durch einen angelehnten Kopf eines Passagiers ihre Winkelstellung nicht ändern.

0152867

2. Kopfstütze nach Anspruch 1, dadurch gekennzeichnet, daß die Gelenkbereiche (24, 26; 36) jeweils in beiden Schwenkrichtungen durch Anschläge (zum Beispiel 51) begrenzt sind.

3. Kopfstütze nach Anspruch 1 oder 2, dadurch gekennzeichnet, daß der Rahmen (38) gebildet ist durch ein Rückteil (42) und ein Vorderteil (40), und daß sich das Zwischenglied (32) zwischen diesen beiden Teilen (40, 42) befindet.

4. Kopfstütze nach einem der Ansprüche 1 bis 3, dadurch gekennzeichnet, daß die ersten Gelenkbereiche (24, 26) sich unterhalb oder oberhalb des zweiten Gelenkbereiches (36) befinden.

5. Kopfstütze nach einem der Ansprüche 1 bis 4, dadurch gekennzeichnet, daß sich die ersten Gelenkbereiche (24, 26) im wesentlichen unterhalb des Stützkissens befinden und daß der zweite Gelenkbereich (36) vorzugsweise im oberen Bereich des Stützkissens angeordnet ist.

6. Kopstütze nach einem der Ansprüche 1 bis 4, dadurch gekennzeichnet, daß sich die ersten Gelenkbereiche (24, 26) im wesentlichen in Höhe des oberen Bereichs des Stützkissens befinden und daß der zweite Gelenkbereich (36) vorzugsweise im unteren Randbereich des Stützkissens angeordnet ist.

7. Kopfstütze nach einem der Ansprüche 1 bis 4, dadurch gekennzeichnet, daß sich der zweite Gelenkbereich (36) in der Mitte des Stützkissens, insbesondere seines Rahmens (38) befindet.

8. Kopfstütze nach einem der Ansprüche 1 bis 7, dadurch gekennzeichnet, daß die Länge des Zwischengliedes (32) zwischen den ersten Gelenkbereichen (24, 26) und dem zweiten Gelenkbereich (36) im wesentlichen der Höhe des Rahmens (38) entspricht.

9. Kopfstütze nach einem der Ansprüche 1 bis 8, dadurch gekennzeichnet, daß das Vorderteil (40) des Rahmens (38) aus Rundrohr gefertigt ist und Rechteckform aufweist und/oder daß an einem Seitenteil des Rahmens (38) um jeweils einen dritten Gelenkbereich verschwenkbar Seitenbackenträger (50) angelenkt sind, wobei die Gelenkreibung wie oben beschrieben eingestellt ist und die Schwenkachse quer zur Schwenkachse des zweiten Gelenkbereichs (36) verläuft.

10. Kopfstütze nach einem der Ansprüche 1 bis 9, dadurch gekennzeichnet, daß das Zwischenglied im Profil U-förmig ausgeführt ist und flache, randseitige Wangen (30), an denen die ersten Gelenkbereiche (24, 26) ausgebildet sind und eine diese Wangen (30) verbindende Basisplatte (34) aufweist, die mit dem zweiten Gelenkbereich (36) verbunden ist, und daß der Abstand der Wangen (30) ausgehend von den ersten Gelenkbereichen (24, 26) zum zweiten Gelenkbereich (36) hin abnimmt, und/oder daß zumindest einige Gelenkbereiche (24, 26; 36, 48) eine Rasteinrichtung mit einem radialen oder axialen Verzahnungsteil und einer nachgiebigen Rastklinke aufweisen.

0152867

FIG. 1

FIG. 2

FIG. 3

FIG. 4